# EUROPÄISCHE PATENTSCHRIFT

(11) **EP 3 071 990 B1**
(45) Veröffentlichungstag und Bekanntmachung des Hinweises auf die Patenterteilung: **25.04.2018**
(21) Anmeldenummer: 14790100.3
(22) Anmeldetag: 29.10.2014
(51) Int. Cl.: G01S 7/527, G01S 15/10, G01S 15/32, G01S 15/87, G01S 15/93, G01S 7/52

(54) **VERFAHREN ZUM BESTIMMEN DES SIGNAL-RAUSCH-VERHÄLTNISSES EINES ZIELECHOS IN EINEM ULTRASCHALLSENSOR**
METHOD FOR DETERMINING THE SIGNAL-TO-NOISE RATIO OF A TARGET ECHO IN AN ULTRASONIC SENSOR
PROCÉDÉ DE DÉTERMINATION DU RAPPORT SIGNAL-SUR-BRUIT DE L'ÉCHO D'UNE CIBLE DANS UN CAPTEUR À ULTRASONS

(30) Priorität: 20.11.2013 DE 102013019431
(43) Veröffentlichungstag der Anmeldung: 28.09.2016
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE)
(86) Internationale Anmeldenummer: PCT/EP2014/073181
(87) Internationale Veröffentlichungsnummer: WO 2015/074842

(56) Entgegenhaltungen:
- EP-A2- 2 144 083
- DE-A1- 3 332 634
- DE-A1-102007 039 348
- DE-A1-102011 086 397
- DE-A1-102012 017 367

## Beschreibung

Die Erfindung betrifft ein Verfahren zum Bestimmen des tatsächlichen bzw. realen Signal-Rausch-Verhältnisses eines Zielechos eines Empfangssignals, welches von einem Ultraschallsensor eines Kraftfahrzeugs empfangen wird. Bei dem Verfahren wird ein Sendesignal - insbesondere desselben Ultraschallsensors - codiert ausgesendet, und hierbei wird beispielsweise ein vorbestimmtes Codewort dem Sendesignal aufgeprägt, etwa mit Hilfe einer Modulation. Das Empfangssignal wird decodiert, wobei zur Decodierung des Empfangssignals selbiges Empfangssignal mit einem Referenzsignal korreliert wird und durch diese Korrelation ein Korrelationssignal bereitgestellt wird. Die Erfindung betrifft außerdem eine Fahrerassistenzeinrichtung, welche zum Durchführen eines solchen Verfahrens ausgebildet ist, wie auch ein Kraftfahrzeug mit einer derartigen Fahrerassistenzeinrichtung.

Ultraschallsensoren für Kraftfahrzeuge sind bereits Stand der Technik. Sie werden üblicherweise zum Unterstützen des Fahrers beim Rangieren des Kraftfahrzeugs eingesetzt, nämlich insbesondere beim Einparken des Kraftfahrzeugs in eine Parklücke sowie beim Ausparken aus der Parklücke. Die Ultraschallsensoren sind dabei Bestandteil einer Fahrerassistenzeinrichtung, welche als Parkassistenzsystem oder aber als Parkhilfe bezeichnet wird. Mit Hilfe der Ultraschallsensoren können Abstände zwischen dem Kraftfahrzeug und in seiner Umgebung befindlichen Hindernisse gemessen werden. Die Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet dabei einen Sendesignal - Ultraschall - aus und empfängt ein Empfangssignal, welches das von einem fahrzeugexternen Objekt reflektierte Sendesignal ist. Es werden also Ultraschallwellen ausgesendet, an einem Objekt reflektiert und wieder empfangen. In Abhängigkeit von der gemessenen Laufzeit der Ultraschallwellen wird dann der Abstand zwischen dem Objekt und dem Kraftfahrzeug bestimmt.

Es ist außerdem Stand der Technik, das Sendesignal eines Ultraschallsensors zu modulieren bzw. zu Codieren, so dass dem Sendesignal ein vorbestimmtes, spezifisches Codewort aufgeprägt wird und mit dem Sendesignal somit dieses spezifische Codewort bzw. eine Kennung übertragen wird. Das Sendesignal kann dann von anderen Störsignalen bzw. von Schallsignalen anderer Sensoren des eigenen Kraftfahrzeugs und auch von Schallsignalen anderer Kraftfahrzeuge unterschieden werden. Auf der einen Seite kann somit das Empfangssignal von Ultraschallsignalen anderer Fahrzeuge unterschieden werden; andererseits wird somit auch ein gleichzeitiger Betrieb mehrerer Ultraschallsensoren ein und desselben Kraftfahrzeugs ermöglicht. In diesem Falle sendet jeder Ultraschallsensor ein Sendesignal mit einer zugeordneten spezifischen Kennung und kann dann das eigene Schallsignal oder aber das Signal eines benachbarten Sensors wieder erkennen.

Ein Verfahren zum gleichzeitigen Betreiben mehrerer Ultraschallsensoren ist beispielsweise aus dem Dokument DE 101 06 142 A1 bekannt. Auch aus der Druckschrift EP 1 105 749 B1 ist bekannt, dass die Sendesignale unterschiedlicher Ultraschallsensoren mit einer eigenen Kennung versehen und somit voneinander unterschieden werden können. Die Codierung eines Schallsignals eines Ultraschallsensors ist des Weiteren aus dem Dokument DE 37 01 521 A1 bekannt.

Wenn das Sendesignal codiert wird und hierbei dem Sendesignal eine spezifische Kennung bzw. ein Codewort aufgeprägt wird, so muss auch überprüft werden, ob das empfangene Empfangssignal dieselbe Kennung aufweist und somit das von einem Objekt reflektierte Sendesignal ist bzw. ein und demselben Ultraschallsensor zugeordnet werden kann. Nach heutigem Stand der Technik werden die empfangenen Signale mittels Korrelation auf ihre Codierung hin überprüft. Das Decodieren des Empfangssignals sieht also so aus, dass dieses Empfangssignal mit einem Referenzsignal korreliert wird, wobei das Ergebnis der Korrelation ein Maß für die Übereinstimmung zwischen dem empfangenen Ultraschallsignal und dem erwarteten Signal ist. Als Referenzsignal wird üblicherweise das ausgesendete Sendesignal bzw. ein Signal verwendet, welches dem Sendesignal entspricht. Wird eine relativ große Korrelation zwischen dem Empfangssignal und dem Referenzsignal erkannt, so wird festgestellt, dass es sich bei dem Empfangssignal um das eigene Signal des Ultraschallsensors handelt. Nur in diesem Falle wird das Empfangssignal weiter bearbeitet und der Abstand zwischen dem Kraftfahrzeug und dem Objekt berechnet.

Anhand einer einfachen Korrelation ist die Bestimmung der Herkunft des Empfangssignals bzw. die Decodierung des Empfangssignals jedoch nicht immer mit großer Genauigkeit möglich. Dies deshalb, weil sich das fahrzeugexterne Objekt häufig relativ zum Kraftfahrzeug bewegt und die Relativgeschwindigkeit zwischen dem Kraftfahrzeug und dem Objekt eine Frequenzverschiebung des Ultraschallsignals aufgrund des Dopplereffekts verursacht. Deshalb wird im Stand der Technik häufig auch ein Referenzsignal für die Korrelation verwendet, welches nicht genau dem ausgesendeten Sendesignal entspricht, sondern einem in seiner Frequenz verschobenen Sendesignal. Somit wird versucht, die Dopplerverschiebung des Empfangssignals zu kompensieren.

Der Nachteil der Korrelation besteht dabei darin, dass das Korrelationsergebnis bzw. das Korrelationssignal ein relativ hohes Eigenrauschen - so genanntes Korrelationsrauschen - enthält, welches das Signal-Rausch-Verhältnis signifikant verringert. Die Bestimmung des Signal-Rausch-Abstands des Korrelationssignals selbst entspricht also nicht dem realen und tatsächlichen Signal-Rausch-Abstand des Empfangssignals. Die Bestimmung des Signal-Rausch-Verhältnisses ist jedoch deshalb von Bedeutung, weil anhand dieses Signal-Rausch-Verhältnisses festgestellt werden kann, ob das Zielecho ein Störecho ist oder aber von dem eigenen Ultraschallsensor stammt. Ohne eine genaue Ermittlung des Signal-Rausch-Verhältnisses lässt sich somit das Korrelationsergebnis nicht präzise auswerten.

Die Berechnung der Korrelation eines von einem Ultraschallsensor empfangenen Empfangssignals mit einem bekannten Muster ist außerdem aus dem Dokument DE 10 2011 086 397 A1 bekannt. In DE 10 2011 086397 A1 korreliert eine Halbleitervorrichtung ein empfangenes Signal mit einem bekannten Muster. Eine Korrelationsausgabe wird hier als Grundlage zum Bilden eines Sicherheitsbezugsniveaus verwendet, wobei das Sicherheitsbezugsniveau eine Schwellwertkurve darstellt, mit welcher die Korrelationsausgabe verglichen wird, um eine Spitze in dem Empfangssignal zu detektieren. Diese Spitze gibt an, dass ein gegenwärtiger Signalzustand des Empfangssignals das bekannte Muster enthält.

Ein Verfahren zur Erzeugung einer Schwellwertkurve für die Auswertung eines Echosignals eines Ultraschallsensors ist beispielsweise aus dem Dokument DE 10 2011 102 574 A1 bekannt.

Es ist Aufgabe der Erfindung, eine Lösung aufzuzeigen, wie bei einem Verfahren der eingangs genannten Gattung das tatsächliche Signal-Rausch-Verhältnis des Zielechos präzise ermittelt werden kann.

Diese Aufgabe wird erfindungsgemäß durch ein Verfahren, durch eine Fahrerassistenzeinrichtung, wie auch durch ein Kraftfahrzeug mit den Merkmalen gemäß den jeweiligen unabhängigen Patentansprüchen 1 und 10 gelöst. Vorteilhafte Ausführungen der Erfindung sind Gegenstand der abhängigen Patentansprüche, der Beschreibung und der Figuren.

Ein erfindungsgemäßes Verfahren dient zum Bestimmen des Signal-Rausch-Verhältnisses eines durch einen Ultraschallsensor eines Kraftfahrzeugs empfangenen Zielechos. Ein Sendesignal wird codiert ausgesendet, und ein durch den Ultraschallsensor empfangenes Empfangssignal wird decodiert. Zur Decodierung wird das Empfangssignal mit einem bekannten Referenzsignal - beispielsweise dem Sendesignal oder einem in seiner Frequenz verschobenen Sendesignal - korreliert und durch diese Korrelation wird ein Korrelationssignal bereitgestellt. Das Zielecho wird in dem Korrelationssignal detektiert. Zur Bestimmung des Signal-Rausch-Verhältnisses wird ein Wert des Rauschens des Empfangssignals anhand des Korrelationssignals bestimmt, wobei das Korrelationssignal im Zeitbereich in eine Vielzahl von aufeinander folgende Signalsegmente unterteilt wird und der Wert des Rauschens alleine anhand von Signalwerten desjenigen der Signalsegmente bestimmt wird, in welchem das Zielecho liegt.

Folglich wird der tatsächliche bzw. reale Wert des Rauschens des Empfangssignals bestimmt, und das Signal-Rausch-Verhältnis wird aus diesem Wert des Rauschens berechnet. Der Wert des Rauschens wird dabei anhand des Korrelationssignals selbst ermittelt, welches ein relativ hohes Eigenrauschen bzw. Korrelationsrauschen enthält. Durch Bestimmung des tatsächlichen Wertes des Rauschens des Empfangssignals anhand des Korrelationssignals wird ermöglicht, das Signal-Rausch-Verhältnis ohne den Einfluss des Korrelationsrauschens selbst zu bestimmen. Somit wird quasi das Korrelationsrauschen selbst bestimmt und kann somit bei der Bestimmung des realen Signal-Rausch-Verhältnisses des Zielechos unberücksichtigt bleiben. Als Ergebnis erhält man folglich ein Signal-Rausch-Verhältnis, welches dem realen bzw. tatsächlichen Signal-Rausch-Abstand entspricht, ohne dass dieser durch das Eigenrauschen des Korrelators beeinflusst wird. Die Bestimmung des Rauschens des Empfangssignals anhand des Korrelationssignals hat den Vorteil, dass zur Bestimmung des Signal-Rausch-Verhältnisses lediglich das Korrelationssignal und nicht zusätzlich noch das ursprüngliche Empfangssignal (vor dem Korrelator) verarbeitet werden muss. Die Genauigkeit bei der Bestimmung des Signal-Rausch-Verhältnisses wird zusätzlich dadurch verbessert, dass der zur Bestimmung des Signal-Rausch-Verhältnisses genutzte Wert des Rauschens alleine anhand von Werten eines Signalsegments des Korrelationssignals ermittelt wird, und zwar desjenigen Signalsegments, in welchem das Zielecho detektiert wird. Somit wird für die Bestimmung des tatsächlichen Rauschens nicht das gesamte Korrelationssignal genutzt, sondern lediglich ein Signalabschnitt um das Zielecho herum. Dies verbessert die Genauigkeit der Bestimmung des tatsächlichen Werts des Rauschens, da nur das lokale Rauschen und somit das zeitlich relevante Rauschen berücksichtigt wird.

Also wird das Korrelationssignal in eine Vielzahl von Signalsegmenten unterteilt. Diese Signalsegmente sind vorzugsweise aufeinander folgende und vorzugsweise aneinander angrenzende Signalabschnitte. Mit anderen Worten wird das Korrelationssignal somit im Zeitbereich in mehrere aufeinander folgende und insbesondere aneinander angrenzende Zeitintervalle unterteilt, wobei zur Bestimmung des Werts des Rauschens zur Ermittlung des Signal-Rausch-Verhältnisses lediglich derjenige Signalabschnitt herangezogen wird, welcher in demjenigen Zeitintervall liegt, in welchem auch das Zielecho detektiert wird.

Als Wert des Rauschens wird vorzugsweise ein lokales Minimum des Korrelationssignals in demjenigen Signalsegment bestimmt, in welchem das Zielecho liegt. Auf diese Art und Weise kann das tatsächliche Grundrauschen des Empfangssignals präzise detektiert werden. Das lokale Minimum stellt nämlich ein Maß für das tatsächliche, reale Rauschen ohne Beeinflussung durch das Korrelationsrauschen dar.

Vorzugsweise wird das Signal-Rausch-Verhältnis als eine Differenz und/oder ein Verhältnis zwischen einem Maximum des Zielechos im Korrelationssignal einerseits und dem ermittelten Wert des Rauschens andererseits bestimmt. Als Ergebnis steht somit ein Signal-Rausch-Abstand zur Verfügung, anhand dessen zuverlässig und präzise festgestellt werden kann, ob es sich bei dem Zielecho um ein Störsignal oder aber um das eigene Signal des Ultraschallsensors handelt. Um dies zu ermitteln, kann das ermittelte Signal-Rausch-Verhältnis beispielsweise mit einem Referenzwert verglichen werden.

Vorzugsweise wird eine Länge der Signalsegmente in Abhängigkeit von einer Codelänge eines Codeworts festgelegt, mit welchem das Sendesignal codiert wird. Die Länge der Signalsegmente hängt somit bevorzugt von der Länge des Sendesignals ab und kann somit im Betrieb des Ultraschallsensors jeweils bedarfsgerecht eingestellt werden. Alle Signalsegmente weisen dabei vorzugsweise die gleiche Länge auf. Es gilt bevorzugt die Beziehung, dass je größer die Codelänge des Codewortes ist, desto größer auch die Länge eines Signalsegments ist. Die Länge der Signalsegmente kann somit situationsabhängig an die Länge des Sendesignals angepasst werden.

Es erweist sich als vorteilhaft, wenn das Signal-Rausch-Verhältnis und/oder Wert des Rauschens einer Plausibilisierung unterzogen wird: Zu der Vielzahl von Signalsegmenten kann jeweils ein lokales Minimum des jeweiligen Signalsegments bestimmt werden, und das Signal-Rausch-Verhältnis und/oder der Wert des Rauschens kann abhängig von den lokalen Minima plausibilisiert werden. Insbesondere wird dabei ein Mittelwert aus allen lokalen Minima berechnet und zur Plausibilisierung des Signal-Rausch-Verhältnisses und/oder des Werts des Rauschens verwendet. Es kann beispielsweise überprüft werden, ob der Wert des Rauschens innerhalb eines Toleranzwertbereiches um den Mittelwert der lokalen Minima liegt und/oder das Signal-Rausch-Verhältnis innerhalb eines Toleranzwertbereiches um ein Referenzverhältnis liegt, welches anhand des Mittelwerts der lokalen Minima berechnet wird. Wird eine Abweichung von dem Toleranzwertbereich detektiert, so kann die aktuelle Messung beispielsweise verworfen oder das Signal-Rausch-Verhältnis auf eine andere Art und Weise bestimmt werden. Somit können Fehler bei der Bestimmung des Signal-Rausch-Verhältnisses und somit bei der Detektion von Zielobjekten verhindert werden.

Es kann optional vorgesehen sein, dass zur Bestimmung des Werts des Rauschens das Korrelationssignal mittels eines Tiefpass-Filters gefiltert wird und hierbei ein Filtersignal bereitgestellt wird. Dann kann der Wert des Rauschens anhand des Filtersignals bestimmt werden. Mit Hilfe eines solchen Tiefpass-Filters kann somit quasi eine Einhüllende bzw. eine Hüllkurve des Korrelationssignals bereitgestellt werden, anhand welcher dann der tatsächliche Wert des realen Rauschens ermittelt werden kann. Die Bereitstellung eines solchen Filtersignals ermöglicht es, den Wert des Rauschens ohne viel Rechenaufwand und präzise zu bestimmen, da sogenannte Ausreißer eliminiert werden können.

Anhand des Signal-Rausch-Verhältnisses kann bestimmt werden, ob das Zielecho das von einem fahrzeugexternen Objekt reflektierte Sendesignal ist und somit von einem tatsächlichen Objekt stammt oder aber ein Störsignal ist, etwa ein Ultraschall einer externen Störquelle.

Die Erfindung betrifft außerdem eine Fahrerassistenzeinrichtung für ein Kraftfahrzeug, mit zumindest einem Ultraschallsensor und mit einer Steuereinrichtung, welche zum Durchführen eines erfindungsgemäßen Verfahrens ausgelegt ist.

Ein erfindungsgemäßes Fahrzeug umfasst eine erfindungsgemäße
Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug mit einer Fahrerassistenzeinrichtung gemäß einer Ausführungsform der Erfindung;
- Fig. 2: zeitliche Verläufe eines Empfangssignals und eines Korrelationssignals eines Ultraschallsensors; und
- Fig. 3 und 4: beispielhafte Verläufe von Korrelationssignalen, wobei ein Verfahren gemäß einer Ausführungsform der Erfindung näher erläutert wird.

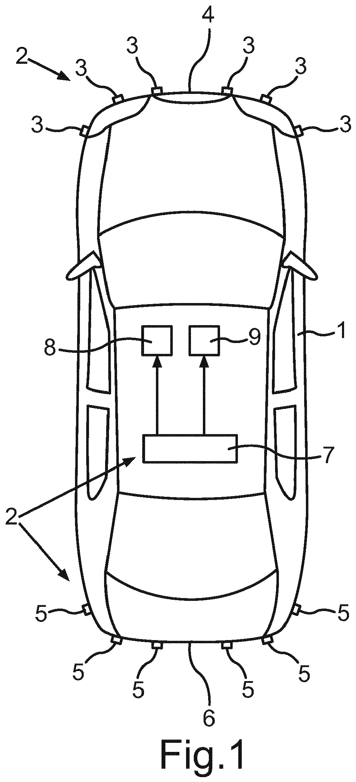

Ein in Fig. 1 dargestelltes Kraftfahrzeug 1 ist beispielsweise ein Personenkraftwagen. Das Kraftfahrzeug 1 beinhaltet eine Fahrerassistenzeinrichtung 2, welche eine Parkhilfe bzw. ein Parkassistenzsystem ist. Die Fahrerassistenzeinrichtung 2 dient zum Unterstützen des Fahrers des Kraftfahrzeugs 1 beim Einparken in eine Parklücke sowie beim Ausparken aus der Parklücke. Die Fahrerassistenzeinrichtung 2 umfasst zu diesem Zwecke eine Vielzahl von Ultraschallsensoren 3, welche an einem vorderen Stoßfänger 4 des Kraftfahrzeugs 1 verteilt angeordnet sind, wie auch eine Vielzahl von Ultraschallsensoren 5, welche an einem hinteren Stoßfänger 6 verteilt angeordnet sind. Alle Ultraschallsensoren 3, 5 sind mit einer Steuereinrichtung 7 der Fahrerassistenzeinrichtung 2 elektrisch gekoppelt. Die Steuereinrichtung 7 kann einen digitalen Signalprozessor bzw. einen Mikrokontroller beinhalten und dient zur Ansteuerung der Ultraschallsensoren 3, 5. Die Steuereinrichtung 7 empfängt auch alle Empfangssignale von den Ultraschallsensoren 3, 5 und bestimmt in Abhängigkeit von diesen Signalen die Abstände zwischen dem Kraftfahrzeug 1 und in seiner Umgebung befindlichen Hindernissen. In Abhängigkeit von diesen Abständen kann die Steuereinrichtung 7 beispielsweise einen Lautsprecher 8 und/oder eine optische Anzeigeeinrichtung 9 - etwa ein Display - ansteuern. Mit Hilfe des Lautsprechers 8 und/oder der Anzeigeeinrichtung 9 wird der Fahrer über die gemessenen Abstände informiert.

Gegebenenfalls kann die Fahrerassistenzeinrichtung 2 auch ein automatisches oder semi-automatisches Parkassistenzsystem sein, mittels welchem eine Parklücke automatisch detektiert und eine geeignete Parkbahn automatisch berechnet wird, entlang welcher das Kraftfahrzeug 1 dann automatisch oder semi-autonom in die Parklücke geführt werden kann. Bei vollautomatischen Parkassistenzsystemen übernimmt die Fahrerassistenzeinrichtung 2 sowohl die Längsführung als auch die Querführung des Kraftfahrzeugs 1, während bei semi-automatischen bzw. halbautomatischen Systemen die Fahrerassistenzeinrichtung 2 lediglich die Querführung und somit die Lenkung automatisch übernimmt, während der Fahrer selbst Gas geben und bremsen muss. Es sind auch Systeme bekannt, bei denen der Fahrer sowohl die Längsführung als auch die Querführung selbst übernehmen muss, jedoch Hinweise bezüglich der Lenkung durch die Fahrerassistenzeinrichtung 2 ausgegeben werden.

Die Steuereinrichtung 7 kann die Ultraschallsensoren 3, 5 derart ansteuern, dass die Ultraschallsensoren 3, 5 jeweils ein Sendesignal (Ultraschall) mit einem aufgeprägten, spezifischen bzw. vorbestimmten Codewort aussenden. Dazu werden die Sendesignale moduliert, beispielsweise frequenz-moduliert und/oder amplituden-moduliert. Nachfolgend wird ein Verfahren gemäß einer Ausführungsform näher erläutert. Wenngleich sich die nachfolgende Beschreibung auf einen einzelnen Ultraschallsensor 3, 5 bezieht, können auch alle anderen Ultraschallsensoren 3, 5 in der gleichen Art und Weise betrieben werden.

Der Ultraschallsensor 3, 5 sendet ein Sendesignal aus, welches auf eine spezifische Art und Weise moduliert ist und somit ein spezifisches Codewort als Kennung aufweist. Dieses Sendesignal wird dann von einem Hindernis reflektiert und gelangt wieder zum Ultraschallsensor 3, 5 als Empfangssignal, noch bevor das nächste Sendesignal ausgesendet wird. Der Ultraschallsensor 3, 5 empfängt dieses Empfangssignal. Um das Empfangssignal zu decodieren und überprüfen zu können, ob das Empfangssignal von dem in Rede stehenden Ultraschallsensor 3, 5 stammt oder nicht, wird das Empfangssignal mit einem Referenzsignal - insbesondere dem frequenz-verschobenen Sendesignal - korreliert und durch diese Korrelation ein Korrelationssignal bereitgestellt.

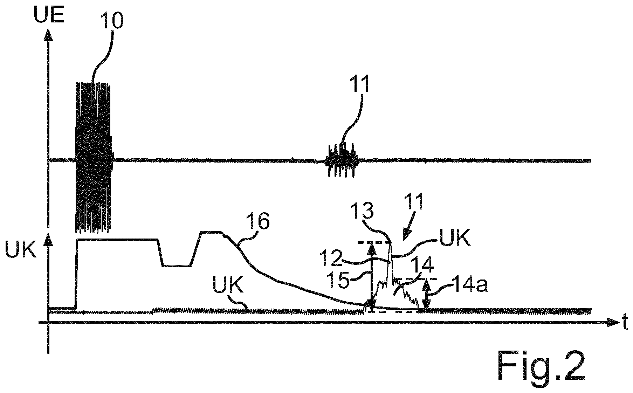

Ein beispielhaftes Empfangssignal UE bzw. seine Funktion über der Zeit t ist in Fig. 2 (oben) dargestellt. Ein erstes Echo 10 entspricht dabei der Schwingung der Membran des Ultraschallsensors 3, 5 beim Aussenden des Sendesignals und stellt somit kein echtes Zielecho des Empfangssignals UE dar. Mit dem Echo 10 wird also insgesamt der Messvorgang eingeleitet, welcher eine vorbestimmte Zeitdauer andauert. Innerhalb dieser Zeitdauer bzw. dieses vorbestimmten Zeitintervalls kann der Ultraschallsensor 3, 5 Zielechos empfangen. Ein derartiges Zielecho ist in Fig. 2 mit 11 bezeichnet.

Wird das Empfangssignal UE mit dem Referenzsignal korreliert, so entsteht ein Korrelationssignal UK, wie es in Fig. 2 unten dargestellt ist. Auch in diesem Korrelationssignal UK ist das Zielecho 11 vorhanden, welches nunmehr die Form einer Signalspitze 12 mit einem Maximum 13 aufweist. Nun soll das Signal-Rausch-Verhältnis dieses Zielechos 11 ermittelt werden. Diese Ermittlung wird jedoch durch ein Korrelationsrauschen bzw. Eigenrauschen 14 des Korrelators negativ beeinflusst, weil dieses Korrelationsrauschen 14 dem Gesamtrauschen 14a überlagert wird. Würde man nun das Signal-Rausch-Verhältnis als Differenz der Höhe 15 bzw. des Maximus 13 einerseits und des Gesamtrauschens 14a andererseits bestimmen, so wäre das Ergebnis dieser Bestimmung unpräzise, weil das Korrelationsrauschen 14 in dem tatsächlichen Empfangssignal UE nicht enthalten ist.

In Fig. 2 ist zusätzlich noch eine Schwellwertkurve 16 dargestellt. Diese Schwellwertkurve 16 hat die Bedeutung, dass mit ihr die Amplitude der empfangenen Zielechos 11 des Korrelationssignals UK verglichen wird und das Zielecho 11 nur dann als mögliches Echo eines Objekts weiter verarbeitet wird, wenn seine Höhe größer als die Schwellwertkurve 16 ist. Die Schwellwertkurve 16 wird also zur Detektion der Zielechos 11 genutzt.

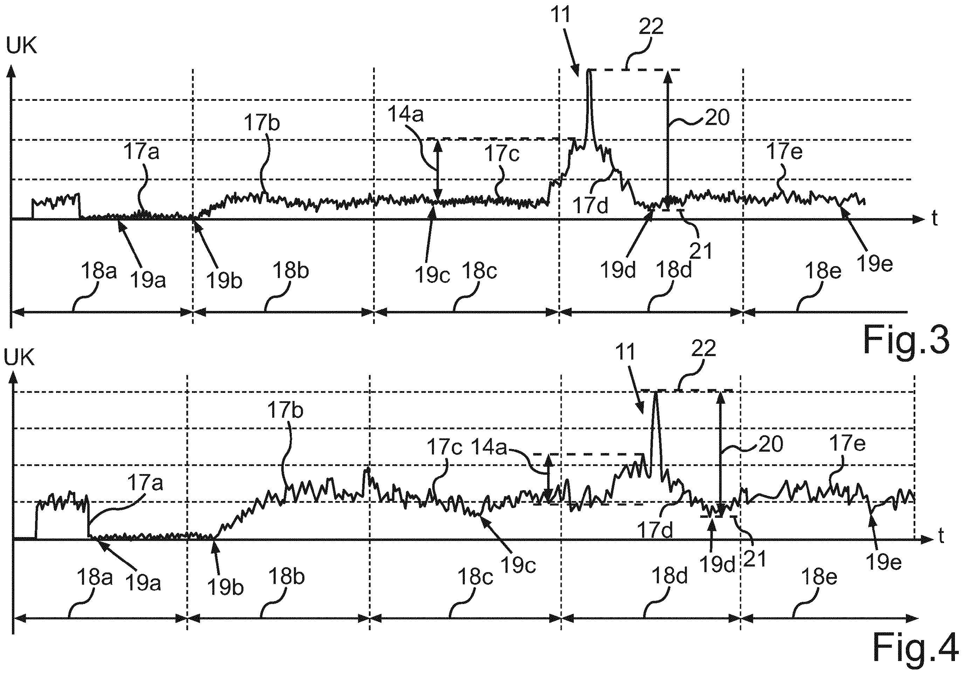

Um den tatsächlichen Wert des realen Rauschens des Empfangssignals UE und somit das tatsächliche Signal-Rausch-Verhältnis zu bestimmen, wird ein Verfahren vorgeschlagen, welches nachfolgend unter Bezugnahme auf die Fig. 3 und 4 näher erläutert wird:
In Fig. 3 ist dabei ein zeitlicher Verlauf eines Korrelationssignals UK ohne externes Rauschen gezeigt, während Fig. 4 einen beispielhaften zeitlichen Verlauf eines durch externes Rauschen beeinflussten Korrelationssignals UK zeigt. Zur Ermittlung des tatsächlichen Rauschens wird das Korrelationssignal UK in eine Mehrzahl von Signalsegmenten 17a bis 17e unterteilt, welche aufeinanderfolgende sowie unmittelbar aneinander angrenzende Signalabschnitte des Korrelationssignals UK darstellen. Mit anderen Worten wird das vorgegebene Messzeitintervall, in welchem das Empfangssignal UE empfangen wird, in eine Mehrzahl von Zeitintervallen 18a bis 18e aufgeteilt. In jedem Zeitintervall 18a bis 18e wird in Echtzeit beziehungsweise beim Bereitstellen des Korrelationssignals UK jeweils ein lokales Minimum 19a bis 19e des jeweiligen Signalsegments 17a bis 17e detektiert. Es wird dann überprüft, in welchen der Zeitintervalle 18a bis 18e ein Zielecho 11 detektiert wird. Im Ausführungsbeispiel gemäß den Fig. 3 und 4 wird ein Zielecho 11 innerhalb des Zeitintervalls 18d detektiert. Zur Bestimmung eines Signal-Rausch-Verhältnisses 20 dieses Zielechos 11 wird ein Wert 21 des Rauschens verwendet, welcher dem lokalen Minimum 19d des Signalsegments 17d innerhalb des Zeitintervalls 18d entspricht. Es wird außerdem ein Maximum 22 des Zielechos 11 bestimmt. Als Signal-Rausch-Verhältnis 20 wird dann eine Differenz oder ein Verhältnis zwischen dem Maximum 22 einerseits und dem lokalen Minimum 21 andererseits bestimmt.

Um zu ermitteln, in welchem Zeitintervall 18a bis 18e das detektierte Zielecho 11 liegt beziehungsweise zu welchem Signalsegment 17a bis 17e dieses Zielecho 11 gehört, kann der maximale Wert, also das Maximum 22, des Zielechos 11 detektiert werden. Das Zielecho 11 gehört damit zu demjenigen Signalsegment 17a bis 17e, in welchem auch das Maximum 22 liegt.

Wie aus Fig. 3 hervorgeht, wird zur Bestimmung des Signal-Rausch-Verhältnisses 20 das tatsächliche Rauschen des Signals verwendet, und nicht das Korrelationsrauschen 14a, welches deutlich höher als das tatsächliche Rauschen liegt. Dieses Korrelationsrauschen 14a ist auch in Fig. 4 gut erkennbar.

Die Länge der Signalsegmente 17a bis 17e beziehungsweise der Zeitintervalle 18a bis 18e wird vorzugsweise im Betrieb des Kraftfahrzeugs 1 eingestellt. Die Einstellung erfolgt dabei in Abhängigkeit von der zeitlichen Länge des Sendesignals und somit abhängig von der Länge des Codeworts, mit welchem das Sendesignal codiert wird. Die Länge der Zeitintervalle 18a bis 18e kann also im Betrieb des Kraftfahrzeugs 1 variieren. Alle Zeitintervalle 18a bis 18e sind dabei vorzugsweise gleich lang. Insbesondere wird auch die Anzahl der Zeitintervalle 18a bis 18e beziehungsweise der Signalsegmente 17a bis 17e konstant gehalten.

Optional kann auch vorgesehen sein, dass das Korrelationssignal UK mittels eines Tiefpass-Filters gefiltert wird, bevor das Signal-Rausch-Verhältnis bestimmt wird. Der Wert 21 des Rauschens kann also im gefilterten Signal detektiert werden.

Optional kann auch vorgesehen sein, dass aus allen lokalen Minima 19a bis 19e ein Mittelwert berechnet wird, welcher das mittlere Rauschen des Empfangssignals UE angibt. Unter Verwendung dieses Mittelwerts kann dann eine Plausibilisierung des Werts 21 des Rauschens und/oder des Signal-Rausch-Verhältnisses 20 vorgenommen werden. Dazu kann beispielsweise überprüft werden, ob der ermittelte Wert 21 des Rauschens in einem Toleranzwertbereich um den Mittelwert liegt. Liegt der Wert 21 außerhalb dieses Toleranzwertebereiches, so kann diese Messung beispielsweise verworfen werden oder das tatsächliche Signal-Rausch-Verhältnis 20 kann abhängig von dem Mittelwert bestimmt werden. Ergänzend oder alternativ kann aus dem Mittelwert auch ein Referenzverhältnis als Verhältnis zwischen dem Maximum 22 und dem Mittelwert berechnet werden. Das ermittelte Signal-Rausch-Verhältnis 20 kann dann mit diesem Referenzverhältnis verglichen werden, und es kann überprüft werden, ob das ermittelte Signal-Rausch-Verhältnis 20 innerhalb eines Toleranzwertebereiches um das Referenzverhältnis liegt. Wird hier eine Abweichung detektiert, kann die Messung verworfen werden oder es kann das Referenzverhältnis als tatsächliches Signal-Rausch-Verhältnis verwendet werden.

## Patentansprüche

1. Verfahren zum Bestimmen des Signal-Rausch-Verhältnisses (20) eines Zielechos (11) eines von einem Ultraschallsensor (3) eines Kraftfahrzeugs (1) empfangenen Empfangssignals (UE), bei welchem:
- ein Sendesignal kodiert ausgesendet wird,
- das Empfangssignal (UE) dekodiert wird und zur Dekodierung das Empfangssignal (UE) mit einem Referenzsignal korreliert wird und durch die Korrelation ein Korrelationssignal (UK) bereitgestellt wird und
- das Zielecho (11) im Korrelationssignal (UK) detektiert wird,
**dadurch gekennzeichnet, dass**
zur Bestimmung des Signal-Rausch-Verhältnisses (20) ein Wert (21) des Rauschens des Empfangssignals (UE) anhand des Korrelationssignals (UK) bestimmt wird und hierbei das Korrelationssignal (UK) im Zeitbereich in eine Vielzahl von aufeinander folgende Signalsegmente (17a bis 17e) unterteilt wird und der Wert (21) des Rauschens alleine anhand von Signalwerten desjenigen der Signalsegmente (17a bis 17e) bestimmt wird, in welchem das Zielecho (11) liegt.

2. Verfahren nach Anspruch 1,
**dadurch gekennzeichnet, dass**
als Wert (21) des Rauschens ein lokales Minimum (19a bis 19e) des Signalsegments (17a bis 17e) bestimmt wird, in welchem das Zielecho (11) liegt.

3. Verfahren nach Anspruch 1 oder 2,
**dadurch gekennzeichnet, dass**
das Signal-Rausch-Verhältnis (20) als Differenz und/oder Verhältnis zwischen einem Maximum (22) des Zielechos (11) im Korrelationssignal (UK) einerseits und dem Wert (21) des Rauschens andererseits bestimmt wird.

4. Verfahren nach einem der vorhergehenden Ansprüche,
**dadurch gekennzeichnet, dass**
eine Länge der Signalsegmente (17a bis 17e) in Abhängigkeit von einer Codelänge eines Codeworts festgelegt wird, mit welchem das Sendesignal codiert wird.

5. Verfahren nach einem der vorhergehenden Ansprüche,
**dadurch gekennzeichnet, dass**
zu der Vielzahl von Signalsegmenten (17a bis 17e) jeweils ein lokales Minimum (19a bis 19e) des jeweiligen Signalsegments (17a bis 17e) bestimmt wird und das Signal-Rausch-Verhältnis (20) und/oder der Wert (21) des Rauschens abhängig von den lokalen Minima (19a bis 19e) plausibilisiert wird.

6. Verfahren nach Anspruch 5,
**dadurch gekennzeichnet, dass** das Signal-Rausch-Verhältnis (20) und/oder der Wert (21) des Rauschens abhängig von einem Mittelwert der lokalen Minima (19a bis 19e) plausibilisiert wird.

7. Verfahren nach einem der vorhergehenden Ansprüche,
**dadurch gekennzeichnet, dass**
zur Bestimmung des Werts (21) des Rauschens das Korrelationssignal (UK) mittels eines Tiefpass-Filters gefiltert wird und hierbei ein Filtersignal bereitgestellt wird, wobei der Wert (21) des Rauschens des Empfangssignals (UE) anhand des Filtersignals bestimmt wird.

8. Verfahren nach einem der vorhergehenden Ansprüche,
**dadurch gekennzeichnet, dass**
anhand des Signal-Rausch-Verhältnisses (20) bestimmt wird, ob das Zielecho (11) ein Signalanteil des von einem fahrzeugexternen Objekt reflektierten Sendesignals oder ein Störsignal ist.

9. Verfahren nach einem der vorhergehenden Ansprüche, **dadurch gekennzeichnet, dass**, um zu ermitteln, zu welchem Signalsegment (17a bis 17e) das Zielecho (11) gehört, der maximale Wert des Zielechos (11) detektiert wird.

10. Fahrerassistenzeinrichtung (2) für ein Kraftfahrzeug (1), mit zumindest einem Ultraschallsensor (3) und mit einer Steuereinrichtung (7), welche dazu ausgelegt ist, den Ultraschallsensor (3) zum Aussenden eines kodierten Sendesignals anzusteuern und zur Dekodierung eines von dem Ultraschallsensor (3) empfangenen Empfangssignals (UE) dieses Empfangssignal (UE) mit einem Referenzsignal zu korrelieren und hierbei ein Korrelationssignal (UK) bereitzustellen, wobei die Steuereinrichtung (7) weiterhin dazu ausgelegt ist, das Signal-Rausch-Verhältnis (20) eines im Korrelationssignal (UK) detektierten Zielechos (11) zu bestimmen,
**dadurch gekennzeichnet, dass**
die Steuereinrichtung (7) dazu ausgelegt ist, zur Bestimmung des Signal-Rausch-Verhältnisses (20) einen Wert (21) des Rauschens des Empfangssignals (UE) anhand des Korrelationssignals (UK) zu bestimmen und hierbei das Korrelationssignal (UK) im Zeitbereich in eine Vielzahl von aufeinander folgende Signalsegmente (17a bis 17e) zu unterteilen und den Wert (21) des Rauschens alleine anhand von Signalwerten desjenigen der Signalsegmente (17a bis 17e) zu bestimmen, in welchem das Zielecho (11) liegt.

11. Kraftfahrzeug (1) mit einer Fahrerassistenzeinrichtung (2) nach Anspruch 10.

## Claims

1. Method for determining the signal-to-noise ratio (20) of a target echo (11) from a received signal (UE) received from an ultrasonic sensor (3) of a motor vehicle (1), in which:
- a transmission signal is transmitted in encoded form,
- the received signal (UE) is decoded and decoding involves the received signal (UE) being correlated with a reference signal and the correlation provides a correlation signal (UK), and
- the target echo (11) is detected in the correlation signal (UK),
**characterized in that**
the signal-to-noise ratio (20) is determined by determining a value (21) of the noise in the received signal (UE) on the basis of the correlation signal (UK) and, in so doing, dividing the correlation signal (UK) in the time domain into a multiplicity of successive signal segments (17a to 17e) and determining the value (21) of the noise solely on the basis of signal values for that one of the signal segments (17a to 17e) that contains the target echo (11).

2. Method according to Claim 1
**characterized in that**
the value (21) determined for the noise is a local minimum (19a to 19e) for the signal segment (17a to 17e) that contains the target echo (11).

3. Method according to Claim 1 or 2,
**characterized in that**
the signal-to-noise ratio (20) is determined as the difference and/or ratio between a maximum (22) for the target echo (11) in the correlation signal (UK), on the one hand, and the value (21) of the noise, on the other hand.

4. Method according to one of the preceding claims,
**characterized in that**
a length of the signal segments (17a to 17e) is stipulated on the basis of a code length of a code word that is used to encode the transmission signal.

5. Method according to one of the preceding claims,
**characterized in that**
the multiplicity of signal segments (17a to 17e) has a respective local minimum (19a to 19e) for the respective signal segment (17a to 17e) determined for it, and the signal-to-noise ratio (20) and/or the value (21) of the noise is plausibilized on the basis of the local minima (19a to 19e).

6. Method according to Claim 5, **characterized in that** the signal-to-noise ratio (20) and/or the value (21) of the noise is plausibilized on the basis of a mean value for the local minima (19a to 19e).

7. Method according to one of the preceding claims,
**characterized in that**
the value (21) of the noise is determined by filtering the correlation signal (UK) by means of a low pass filter and, in so doing, providing a filter signal, wherein the value (21) of the noise in the received signal (UE) is determined on the basis of the filter signal.

8. Method according to one of the preceding claims,
**characterized in that**
the signal-to-noise ratio (20) is taken as a basis for determining whether the target echo (11) is a signal component of the transmission signal reflected by a vehicle-external object or is an interference signal.

9. Method according to one of the preceding claims, **characterized in that**, in order to determine which signal segment (17a to 17e) the target echo (11) belongs to, the maximum value of the target echo (11) is detected.

10. Driver assistance device (2) for a motor vehicle (1), having at least one ultrasonic sensor (3) and having a control device (7) that is designed to actuate the ultrasonic sensor (3) to transmit an encoded transmission signal and is designed to decode a received signal (UE) received from the ultrasonic sensor (3) by correlating this received signal (UE) with a reference signal, and, in so doing, to provide a correlation signal (UK), wherein the control device (7) is additionally designed to determine the signal-to-noise ratio (20) of a target echo (11) detected in the correlation signal (UK),
**characterized in that**
the control device (7) is designed to determine the signal-to-noise ratio (20) by determining a value (21) of the noise in the received signal (UE) on the basis of the correlation signal (UK) and, in so doing, dividing the correlation signal (UK) in the time domain into a multiplicity of successive signal segments (17a to 17e) and determining the value (21) of the noise solely on the basis of signal values for that one of the signal segments (17a to 17e) that contains the target echo (11).

11. Motor vehicle (1) having a driver assistance device (2) according to Claim 10.

## Revendications

1. Procédé de détermination du rapport signal-sur-bruit (20) de l'écho (11) d'une cible dans un signal de réception (UE) reçu d'un capteur à ultrasons (3) d'un véhicule automobile (1), dans lequel :
- un signal d'émission est émis sous forme codée,
- le signal de réception (UE) est décodé et est corrélé avec un signal de référence pour décoder le signal de réception (UE) et un signal de corrélation (UK) est produit par la corrélation, et
- l'écho (11) de la cible est détecté dans le signal de corrélation (UK),
**caractérisé en ce que**, pour déterminer le rapport signal-sur-bruit (20), une valeur (21) du bruit du signal de réception (UE) est déterminée en se fondant sur le signal de corrélation (UK), et **en ce que** le signal de corrélation (UK) est à cet effet divisé en une pluralité de segments de signal (17a à 17e) et **en ce que** la valeur (21) du bruit est déterminée en se fondant seulement sur des valeurs de signal de celui des segments de signal (17a à 17e) dans lequel l'écho (11) de la cible est présent.

2. Procédé selon la revendication 1,
**caractérisé en ce qu'**un minimum local (19a à 19e) du segment de signal (17a à 17e) dans lequel se situe l'écho (11) de la cible est déterminé en tant que valeur (21) du bruit.

3. Procédé selon la revendication 1 ou 2,
**caractérisé en ce que** le rapport signal-sur-bruit (20) est déterminé comme étant la différence et/ou le rapport entre d'une part un maximum (22) de l'écho (11) de la cible dans le signal de corrélation (UK) et d'autre part la valeur (21) du bruit.

4. Procédé selon l'une des revendications précédentes,
**caractérisé en ce qu'**une longueur des segments de signal (17a à 17e) est fixée en fonction d'une longueur de code d'un mot de code avec lequel le signal d'émission est codé.

5. Procédé selon l'une des revendications précédentes,
**caractérisé en ce qu'**un minimum local respectif (19a à 19e) du segment de signal respectif (17a à 17e) est déterminé dans la pluralité de segments de signal (17a à 17e) et **en ce que** la plausibilité du rapport signal-sur-bruit (20) et/ou la valeur (21) du bruit est déterminée en fonction des minima locaux (19a à 19b).

6. Procédé selon la revendication 5,
**caractérisé en ce que** la plausibilité du rapport signal-sur-bruit (20) et/ou de la valeur (21) du bruit est déterminé en fonction d'une moyenne des minima locaux (19a à 19e).

7. Procédé selon l'une des revendications précédentes,
**caractérisé en ce que** le signal de corrélation (UK) est filtré au moyen d'un filtre passe-bas pour déterminer la valeur (21) du bruit et **en ce qu'**un signal filtré dans lequel la valeur (21) du bruit du signal de réception (UE) est déterminée, est ainsi obtenu en se fondant sur le signal filtré.

8. Procédé selon l'une des revendications précédentes,
**caractérisé en ce qu'**il est déterminé en se fondant sur le rapport signal-sur-bruit (20) si l'écho (11) de la cible est une fraction de signal du signal d'émission réfléchi par un objet extérieur au véhicule ou un signal parasite.

9. Procédé selon l'une des revendications précédentes, **caractérisé en ce que** la valeur maximale de l'écho (11) de la cible est détectée pour déterminer à quel segment de signal (17a à 17e) appartient l'écho (11) de la cible.

10. Dispositif d'aide à la conduite (2) destiné à un véhicule automobile (1), comportant au moins un capteur à ultrasons (3) et comportant un dispositif de commande (7) qui est conçu pour commander le capteur à ultrasons (3) afin qu'il émette un signal d'émission codé et pour décoder un signal de réception (UE) reçu par le capteur à ultrasons (3), pour corréler ledit signal de réception (UE) avec un signal de référence et pour ainsi produire un signal de corrélation (UK), dans lequel le dispositif de commande (7) est en outre conçu pour déterminer le rapport signal-sur-bruit (20) d'un écho (11) de la cible détecté dans le signal de corrélation (UK),
**caractérisé en ce que** le dispositif de commande (7) est conçu pour déterminer une valeur (21) du bruit du signal de réception (UE) en se fondant sur le signal de corrélation (UK) afin de déterminer le rapport signal-sur-bruit (20) et pour diviser à cet effet le signal de corrélation (UK) en une pluralité de segments de signal (17a à 17e) consécutifs et pour déterminer la valeur (21) du bruit en se fondant seulement sur des valeurs de signal de ceux des segments de signal (17a à 17e) dans lesquels l'écho (11) de la cible est présent.

11. Véhicule automobile (1) comportant un dispositif d'aide à la conduite (2) selon la revendication 10.
